(19) **Europäisches Patentamt / European Patent Office / Office européen des brevets**

(11) **EP 4 414 764 A1**

(12) **EUROPEAN PATENT APPLICATION**

(43) Date of publication:
**14.08.2024 Bulletin 2024/33**

(21) Application number: **23166252.9**

(22) Date of filing: **31.03.2023**

(51) International Patent Classification (IPC):
**G02B 19/00** (2006.01) **B60Q 1/04** (2006.01)
**F21S 41/143** (2018.01) **F21S 41/255** (2018.01)
**F21S 41/32** (2018.01) **F21S 41/40** (2018.01)
**G02B 27/00** (2006.01) **G06N 3/006** (2023.01)
**G02B 3/04** (2006.01)

(52) Cooperative Patent Classification (CPC):
**G02B 19/0061; F21S 41/143; F21S 41/151;**
**F21S 41/255; F21S 41/285; F21S 41/322;**
**F21S 41/43; G02B 19/0028; G02B 19/0066;**
G02B 3/04; G06N 3/006

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **10.02.2023 CN 202310093865**

(71) Applicant: **Shanghai Jiuke Genuine Parts Co. Ltd.**
**Shanghai Shanghai 201900 (CN)**

(72) Inventors:
• **ZHENG, Rongxiu**
**Shanghai, 201900 (CN)**
• **HUANG, Daze**
**Shanghai, 201900 (CN)**

(74) Representative: **JD&P Patent Attorneys**
**Joanna Dargiewicz & Partners**
**ul. Mysliborska 93A/50**
**03-185 Warszawa (PL)**

(54) **GENERAL TRAFFIC HEADLIGHT**

(57)    The present invention discloses a general traffic headlight, including LEDs, a free-form surface convergence system located in front of the LEDs, a baffle located in front of the free-form surface convergence system, and a free-form surface outer lens located in front of the baffle. The free-form surface convergence system includes a collimator and a free-form surface; and all light rays are shot into the distance in parallel along an optical axis by the collimator, and the free-form surface at a light-emitting window is employed to design a light shape that meets the regulatory requirements. A structure of the headlight in this design is mainly composed of the collimator, the free-form surface, and the free-form surface outer lens. All the light rays are shot into the distance in parallel along the optical axis by the collimator, and the free-form surface at the light-emitting window is employed to design the light shape that meets the regulatory requirements. The LEDs are adopted as light sources. The light emitted by the LEDs forms parallel light through the collimator, and is then scattered and deflected via the free-form surface outer lens so as to meet the relevant regulatory requirements and regulations, thus achieving the effects of illuminating the road surface and preventing glare at the same time.

FIG. 4

EP 4 414 764 A1

**Description**

**TECHNICAL FIELD**

The present invention relates to a lighting technology, in particular to a headlight for a vehicle.

**BACKGROUND ART**

Traffic headlights has experienced a development history of incandescent lamps, halogen lamps, xenon headlights, LEDs and lasers, where the LEDs are the most commonly used light sources for traffic lights, and the LED is a novel vehicle light source that has emerged in recent years. Compared with incandescent lamps, the halogen lamps, and vehicle lights, LED vehicle lights have the advantages of being long in illumination distance, low in power requirements and high in brightness. In order to make the LEDs applicable to the lighting needs of automobile headlights, motorcycle lights and electric headlights, and to make the automobile headlights, the motorcycle lights and the electric headlights comply with the relevant regulatory requirements, it is necessary to carry out adaptive design on LED vehicle lights with different wheels.

**SUMMARY OF THE INVENTION**

The technical problem to be solved by the present invention is how to simplify the adaptive design of LED vehicle lights, so that the LED vehicle lights are allowed to meet the needs of a variety of traffic lighting, and accord with the relevant regulatory requirements.

In order to solve the above technical problem, the present invention provides the following technical solution: a general traffic headlight includes LEDs, a free-form surface convergence system located in front of the LEDs, a baffle located in front of the free-form surface convergence system, and a free-form surface outer lens located in front of the baffle, where the free-form surface convergence system includes a collimator and a free-form surface; and all light rays are shot into the distance in parallel along an optical axis by the collimator, and the free-form surface at a light-emitting window is employed to design a light shape that meets the regulatory requirements.

A structure of the headlight in this design is mainly composed of the collimator, the free-form surface, and the free-form surface outer lens. All the light rays are shot into the distance in parallel along the optical axis by the collimator, and the free-form surface at the light-emitting window is employed to design the light shape that meets the regulatory requirements. The LEDs are adopted as light sources. The light emitted by the LEDs forms parallel light through the collimator, and is then scattered and deflected via the free-form surface outer lens so as to meet the relevant regulatory requirements and regulations, thus achieving the effects of illuminating the road surface and preventing glare at the same time.

The entire free-form surface light convergence system in this design is designed and optimized by employing the free-form surface. The system is divided into two parts, i.e., a total reflection portion and a refraction portion. The system can control the distribution of light. Light control is performed by analyzing the regulatory requirements for different vehicles, so that the overall volume can be made smaller. The free-form surface is used for design, so that the light-gathering efficiency of the whole light convergence system will be higher, and the volume thereof will be smaller. The free-form surface light convergence system can be better than the conventional light convergence system. During the design of the free-form surface light convergence system, the free-form surface light convergence system is designed by combining direct calculation with an optimization algorithm. First, a light source is approximated to a point light source, the surface of the light convergence system is approximated to a plane, and a mesh mapping method and an iterative algorithm are used to solve refracting and total reflecting surfaces, so that an initial surface shape of the light convergence system is obtained. After that, an optical model is established according to the structure of a vehicle light, the light source is set as a surface light source, the refracting and total reflecting surfaces of the light convergence system are optimized at the same time, and a surface shape of the light convergence system is finally obtained.

The present invention employs a free-form surface design to reshape the light. Compared with ordinary lenses, the present invention reduces the number and thickness of used lenses while maintaining the same reshaping effect. By using the plurality of LEDs as the light sources, the brightness of the vehicle light is greatly increased. By replacing different particles and adjusting the power of the LEDs, different vehicle lighting requirements can be met.

Due to adoption of the technical solution provided by the present invention, the vehicle light can be made more versatile and smaller in size, realizes the versatility of different vehicle lighting, and has the characteristics of being long in lighting distance, high in lighting intensity, low in energy consumption, and the like.

The free-form surface outer lens is a polynomial aspheric surface, and a surface equation thereof is as follows:

$$z = \frac{cx^2}{1+\sqrt{1-(1+k)c^2x^2}} + c_1 x + c_2 x^2 + c_3 x^3 + \ldots c_{20} x^{20}$$

where c is a curvature, k is a conical coefficient, C1, C2, C3...C20 are aspheric coefficients, x is a rotational symmetry axis of an aspheric surface, and z is an incident height of an incident light on the aspheric surface.

The baffle in this design is not a single baffle. The baffle includes a combination of baffles for various traffic vehicles, such as a baffle with a 45-degree angle or a 15-degree angle for a car; when being used for a motorcycle, the baffle will be replaced with a flat baffle without an angle; the flat baffle is also used for lighting an electric vehicle; and the flat baffle can also be used for lighting a bicycle. When the baffle is replaced, the power of a chip and the corresponding particle number will be adjusted accordingly, but there is no need to redesign an inner lens. By changing the baffle and particles, the lighting needs of the different vehicles, such as electric vehicles, motorcycles and automobiles, can be met. When the free-form surface convergence system is designed, the lighting changes caused by the different particle numbers and power have been taken into account, which can be used to meet different vehicle lighting requirements.

## BRIEF DESCRIPTION OF THE DRAWINGS

The present invention will be further illustrated below in conjunction with the accompanying drawings:

FIG. 1 is a schematic diagram of a brand new general LED traffic headlight with light distribution for a car, a motorcycle, or the like;
FIG. 2 is an exploded view of FIG. 1;
FIG. 3 is an exploded view of FIG. 2;
FIG. 4 is a two-dimensional structure diagram of the brand new general LED traffic headlight with light distribution for a car, a motorcycle, or the like;
FIG. 5 is a schematic diagram of a free-form surface convergence system in FIG 4; and

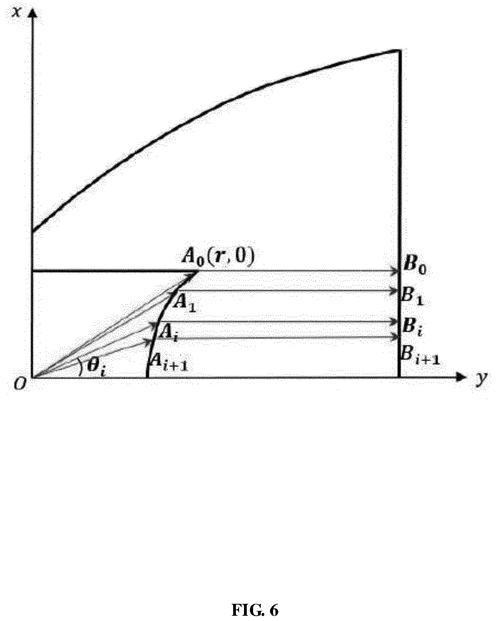

FIG. 6 is a schematic diagram of a calculation process of the free-form surface convergence system.

The following reference numerals on the drawings are described below:

10 denotes a free-form surface outer lens;
20 denotes a decorative frame;
30 denotes a baffle; 31 denotes a baffle bearing frame;
40 denotes a free-form surface convergence system;
50 denotes an LED particle board; and
60 denotes a radiator.

## DETAILED DESCRIPTION OF THE INVENTION

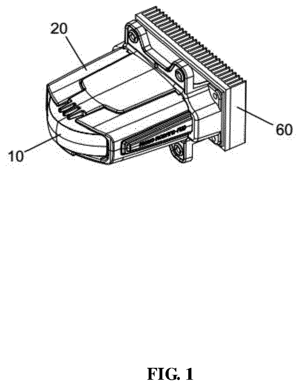

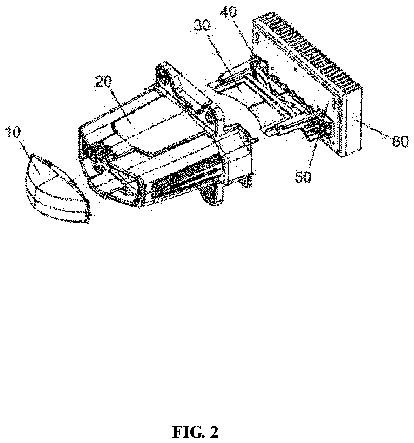

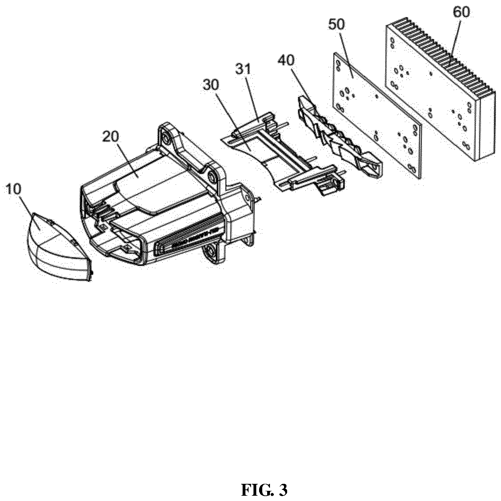

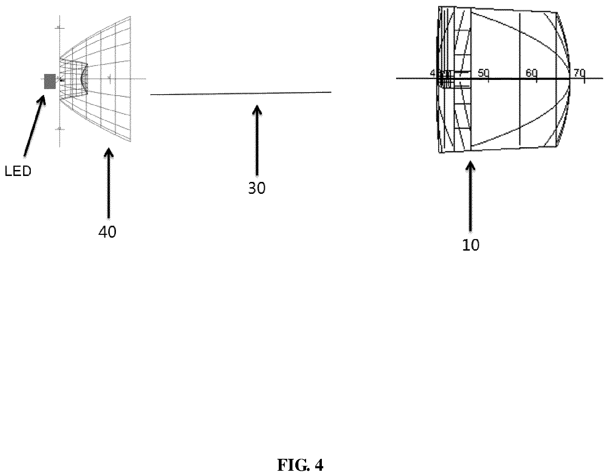

In conjunction with FIG. 1 to FIG. 4, a brand new design of a general LED traffic headlight with light distribution for a car, a motorcycle, or the like includes LEDs, a free-form surface convergence system 40, a different type of baffle 30, and a free-form surface outer lens 10. The LEDs are installed on an LED particle board 50, the LED particle board is installed on a radiator 60, the radiator is provided with a decorative frame 20, and the free-form surface outer lens 10, the baffle 30, and the free-form surface convergence system 40 are located in the decorative frame 20. The baffle 30 is installed on a baffle bearing frame 31, and the baffle bearing frame is installed on the radiator 60.

The core of the free-form surface convergence system 40 is to divide an light incident end of a condenser into different areas in a circumferential direction to carry out separate design in the different areas, thus meeting the lighting requirements of different traffic vehicles at the same time, or meeting the needs of special vehicles for the special lighting effects at different positions in the circumferential direction of the condenser.

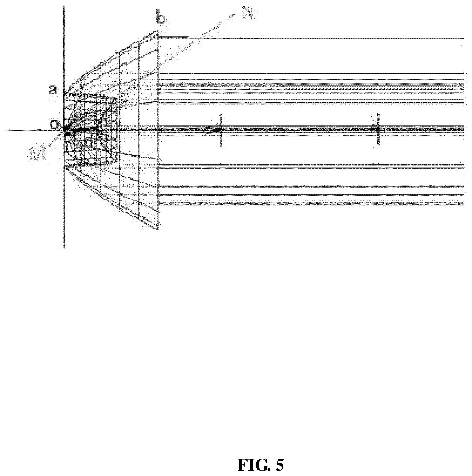

As shown in FIG. 5, the free-form surface convergence system 40 divides a small-angle incident light receiving surface into multiple refracting surfaces, so that the refracting surfaces have at least two focal length specifications. The orthogonal projections of the refracting surfaces along the direction of a designed optical axis are sectors with the same center, and the sum of central angles of all the sectors is 360 degrees. A step structure is formed at a junction of every two adjacent refracting surfaces, and a plane passing through the designed optical axis is used as an interface. This method is equivalent to performing circumferential sector partition on the small-angle incident light receiving surface at the light incident end with the designed optical axis as a center, which can make the different areas in the circumferential direction of the condenser have different light collection efficiencies, light utilization rates and lighting effects. Furthermore, the structure is relatively simple, and the light distribution can be quickly controlled, so that the lighting requirements of the different vehicles are met.

After that, the total reflecting surface at the light incident end is further divided into a plurality of total reflection blocks. All the total reflection blocks are segments of rotating surfaces whose rotation axes coincide with the designed optical axis, but there are at least two different plane curves that form the total reflection blocks. The orthographic projections of all the total reflection blocks along the direction of the designed optical axis are sector rings with the same center, and the sum of central angles corresponding to all the sector rings is 360 degrees. A step structure is formed at a junction of every two adjacent total reflection blocks, and a plane passing through the designed optical axis is used as an interface.

Preferably, the total reflection blocks and the refracting surfaces are in one-to-one correspondence in a radial direction, and the central angles corresponding to the total reflection blocks coincide with the central angles corresponding to the refracting surfaces. After controlling the light distribution of the design of the free-form surface convergence system 40, the light distribution is projected by means of the free-form surface outer lens 10. After corresponding calculation, different regulatory requirements and illumination requirements can be met.

The vehicle lights of the different vehicles are different in traffic lighting requirements and regulatory requirements. In order to achieve a versatile vehicle light design, the main method is to control the free-form surface convergence system 40, the change of the baffle 30 and the number of LED particles.

In the aspect of structural design, the free-form surface convergence system 40 includes a collimator and a free-form surface.

In order to overcome the defect of the traditional LED collimator for a vehicle light in realization of high efficiency, a collimation optimizing lens method is first designed. The optical design of the LED collimator for the vehicle light is based on extended LED light sources. Based on LED point light sources, the LED collimator for the vehicle light is designed as an initial structure. A surface light source is discretized into the several point light sources, and a contour for the LED collimator for the vehicle light is designed for each of the point light sources. The contours for the collimator are respectively multiplied by weight coefficients, the weighted contours are superimposed, and then the superimposed contour is optimized, and the optimized variables are the weight coefficients. A particle swarm optimization algorithm is used to find the best weight ratio, so that the system efficiency is improved. The simulation verification shows that the efficiency can be increased by 20% to 30%. The working principle of the optimized collimator is total reflection. In a process of light transmission, part of the light is transmitted by light using the principle of total reflection. Because the collimator is rotationally axisymmetric, only an upper half part of the collimator is analyzed. As shown in FIG. 5, a split line MN divides the light emitted from a point O into two parts. When the light is refracted to the interior through a part ac of an inner wall of an inner hole, the light that reaches an outer contour curve ab of the collimator will be completely reflected by an internal structure of the collimator, and is thus emitted in parallel. The refraction from a center cd of the inner hole to the interior mainly uses an aspheric lens to make the light emitted in parallel on the basis of a design imaging principle of an optical system of an automotive headlight based on a double free-form surface lens. Finally, the two parts of light are emitted in parallel on a light-emitting surface of the collimator, and both the two parts of light are collimated light.

The collimator optimized in the previous step is used to design. A light-emitting window of the collimator is the free-form surface. The free-form surface of the collimator can be used for light shape distribution. The data design of the free-form surface is carried out according to a road surface illumination required by a bus and an intensity value of a 25 m of test point. The surface shape of the free-form surface designed at the light-emitting window of the collimator is designed according to the intensity required by the test point, and then the change in the surface shape of the free-form surface is controlled, so that the intensity values of different demand points are met. The different intensity requirements can be met according to the arbitrary changes of the free-form surface. Intensity value rise and fall as well as width requirement design can be achieved, so as to realize miniaturization and high efficiency in an actual lighting process while meeting the verification of regulations.

In the design, it is necessary to take into account the common points and similarities between different regulations, and then different needs are met by controlling light distribution. For example, when the automotive road lighting requirements need to be met, the intensity values of all regulatory points shall be taken into account. For example, at the regulatory points such as 75R and 50R, if you want to use the module to meet the lighting needs of motorcycles, the corresponding baffle 30 and the number of particles need to be replaced, so that the lighting needs of the motorcycles can be met. When the free-form surface converging system 40 is designed, the illumination changes caused by different numbers of the particles and power have been considered, and different illumination requirements can be met by using such changes.

The above content is only an exemplary implementation of the present invention. For those of ordinary skilled in the art, according to the idea of the present invention, there will be changes in the specific implementations and application scope, and the content of the Description should not be construed as a limitation on the present invention.

**Claims**

1. A general traffic headlight, comprising LEDs, a free-form surface convergence system (40) located in front of the LEDs, a baffle (30) located in front of the free-form surface convergence system, and a free-form surface outer lens (10) located in front of the baffle, wherein the free-form surface convergence system comprises a collimator and a free-form surface; and all light rays are shot into the distance in parallel along an optical axis by the collimator, and the free-form surface at a light-emitting window is employed to design a light shape that meets the regulatory requirements.

2. The general traffic headlight according to claim 1, wherein the LEDs are installed on an LED particle board (50), the LED particle board is installed on a radiator (60), the radiator is provided with a decorative frame (20), and the free-form surface outer lens (10), the baffle (30), and the free-form surface convergence system (40) are located in the decorative frame.

3. The general traffic headlight according to claim 2, wherein the baffle (30) is installed on a baffle bearing frame (31), and the baffle bearing frame is installed on the radiator (60).

4. The general traffic headlight according to claim 1, wherein the free-form surface outer lens (10) is made of silica gel.

5. The general traffic headlight according to claim 1, wherein the free-form surface outer lens (10) has an aspheric structure, and a surface equation thereof is as follows:

$$z = \frac{cx^2}{1+\sqrt{1-(1+k)c^2x^2}} + c_1x + c_2x^2 + c_3x^3 + \dots c_{20}x^{20}$$

wherein c is a curvature, k is a conical coefficient, C1, C2, C3...C20 are aspheric coefficients, x is a rotational symmetry axis of an aspheric surface, and z is an incident height of an incident light on the aspheric surface.

6. The general traffic headlight according to claim 1, wherein based on LED point light sources, an LED collimator for a vehicle light is designed as an initial structure, a surface light source is discretized into the several point light sources, and a contour for the LED collimator for the vehicle light is designed for each of the point light sources; the contours for the collimator are respectively multiplied by weight coefficients, the weighted contours are superimposed, and then the superimposed contour is optimized, and the optimized variables are the weight coefficients; and a particle swarm optimization algorithm is used to find the best weight ratio.

7. The general traffic headlight according to claim 6, wherein a surface shape of the free-form surface designed at the light-emitting window of the collimator is designed according to the intensity required by a test point, thus meeting intensity values required by different test points.

**FIG. 1**

**FIG. 2**

**FIG. 3**

LED

30

40

10

**FIG. 4**

**FIG. 5**

**FIG. 6**

**EP 4 414 764 A1**

Europäisches
Patentamt

European
Patent Office

Office européen
des brevets

# EUROPEAN SEARCH REPORT

Application Number

EP 23 16 6252

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/061398 A1 (LEE HYUN SOO [KR]) 3 March 2016 (2016-03-03) | 1,5 | INV. G02B19/00 |
| Y | * figures 5, 6, 10 * | 2-4,6,7 | B60Q1/04 F21S41/143 |
| Y | US 2022/074564 A1 (LI CONG [CN] ET AL) 10 March 2022 (2022-03-10) * paragraph [0134] – paragraph [0140]; figures 1, 2, 10, 11 * | 2-4 | F21S41/255 F21S41/32 F21S41/40 G02B27/00 G06N3/006 |
| Y | US 2021/208469 A1 (DIDOMENICO LEO D [US]) 8 July 2021 (2021-07-08) * paragraph [0251] * | 6,7 | ADD. G02B3/04 |

TECHNICAL FIELDS
SEARCHED      (IPC)

G02B
F21S
B60Q
G06N

The present search report has been drawn up for all claims

| Place of search | Date of completion of the search | Examiner |
|---|---|---|
| Munich | 4 October 2023 | Denner, Peter |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................

& : member of the same patent family, corresponding
document

EPO FORM 1503 03.82 (P04C01)

12

**EP 4 414 764 A1**

## ANNEX TO THE EUROPEAN SEARCH REPORT
## ON EUROPEAN PATENT APPLICATION NO.

EP 23 16 6252

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2023

| Patent document cited in search report | | Publication date | Patent family member(s) | | Publication date |
|---|---|---|---|---|---|
| US 2016061398 | A1 | 03-03-2016 | CN | 105372802 A | 02-03-2016 |
| | | | KR | 20160024483 A | 07-03-2016 |
| | | | US | 2016061398 A1 | 03-03-2016 |
| US 2022074564 | A1 | 10-03-2022 | US | 2022074564 A1 | 10-03-2022 |
| | | | WO | 2020233297 A1 | 26-11-2020 |
| US 2021208469 | A1 | 08-07-2021 | NONE | | |

EPO FORM P0459

For more details about this annex : see Official Journal of the European Patent Office, No. 12/82

13